# EUROPEAN PATENT APPLICATION

(11) **EP 4 525 252 A1**
(43) Date of publication of application: **19.03.2025**
(21) Application number: 24181176.9
(22) Date of filing: 10.06.2024
(51) Int. Cl.: H02J 3/32, H02J 7/00, H02J 9/06

(54) **A POWER SYSTEM AND A METHOD OF OPERATING POWER SYSTEM**

(30) Priority: 20.07.2023 US 202318224114
(71) Applicant: Schneider Electric IT Corporation, Foxboro, MA 02035 (US)
(72) Inventor: KALVAKUNTA, Murali Krishna, 02035 FOXBORO (US); NAGABHUSHANRAO, Pradeep Tolakanahalli, 02035 FOXBORO (US); PRASAD, Himamshu Viswathmula, 02035 FOXBORO (US)
(74) Representative: Plasseraud IP

(57) **Abstract**

Examples of the disclosure include a power system comprising an input configured to be coupled to at least one power source, an output configured to be coupled to at least one load, an energy-storage-device connection configured to be coupled to at least one energy-storage device, at least one power converter, and at least one controller configured to control the at least one power converter to provide power to the output in a battery mode of operation, determine one or more battery-mode parameters associated with the battery mode of operation, determine a maximum state-of-charge (SOC) limit based on the one or more battery-mode parameters, and control the at least one power converter to charge the at least one energy-storage device to the maximum SOC limit.

## Description

### BACKGROUND

### 1. Field of the Disclosure

At least one example in accordance with the present disclosure relates generally to power devices.

### 2. Discussion of Related Art

Power devices, such as uninterruptible power supplies (UPSs), may be used to provide regulated, uninterrupted power for sensitive and/or critical loads, such as computer systems and other data-processing systems. Existing UPSs include online UPSs, offline UPSs, line-interactive UPSs, as well as others. UPSs may provide output power to a load. The output power may be derived from a primary source of power, such as a utility-mains source, and/or derived from a back-up source of power, such as an energy-storage device.

### SUMMARY

According to at least one aspect of the present disclosure, a power system is provided comprising an input configured to be coupled to at least one power source, an output configured to be coupled to at least one load, an energy-storage-device connection configured to be coupled to at least one energy-storage device, at least one power converter, and at least one controller configured to control the at least one power converter to provide power to the output in a battery mode of operation, determine one or more battery-mode parameters associated with the battery mode of operation, determine a maximum state-of-charge (SOC) limit based on the one or more battery-mode parameters, and control the at least one power converter to charge the at least one energy-storage device to the maximum SOC limit.

In at least one example, the at least one power source includes a first power source and a second power source. In at least one example, the at least one controller is further configured to determine that input power received from the second power source is not acceptable, and send an activation signal to the first power source responsive to determining that the input power is not acceptable. In at least one example, the at least one controller is configured to control the at least one power converter to provide power to the output in the battery mode of operation responsive to sending the activation signal to the first power source. In at least one example, the at least one controller is configured to control the at least one power converter to provide power to the output in the battery mode of operation until the first power source is synchronized with the at least one load.

In at least one example, the one or more battery-mode parameters include one or more of a load profile of the at least one load, a changeover time for the first power source to synchronize with the at least one load, or a total runtime of the at least one energy-storage device in the battery mode. In at least one example, the at least one controller is configured to control the at least one power converter to provide power to the output in the battery mode of operation until the first power source is synchronized with the at least one load. In at least one example, the first power source includes a generator and the second power source includes a utility mains. In at least one example, the one or more battery-mode parameters include one or more of a load profile of the at least one load, a total necessary runtime of the at least one energy-storage device, or a total available runtime of the at least one energy-storage device in the battery mode.

In at least one example, the at least one controller is further configured to determine, based on the one or more battery-mode parameters, a maximum expected runtime of the at least one energy-storage device, and determine the maximum SOC limit based on the maximum expected runtime of the at least one energy-storage device. In at least one example, the at least one controller is further configured to determine a maximum expected SOC corresponding to the maximum expected runtime, and determine the maximum SOC limit based on the maximum expected SOC. In at least one example, determining the maximum SOC limit includes at least one of multiplying the maximum expected SOC by a multiplication safety factor or adding the maximum expected SOC with an addition safety factor.

In at least one example, the at least one controller is further configured to monitor the one or more battery-mode parameters for changes while the at least one energy-storage device discharges, identify a change in the one or more battery-mode parameters while the at least one energy-storage device discharges, and lower a battery cut-off voltage of the at least one energy-storage device responsive to identifying the change in the one or more battery-mode parameters. In at least one example, the at least one controller is further configured to monitor the one or more battery-mode parameters for changes while the at least one energy-storage device charges, identify a change in the one or more battery-mode parameters while the at least one energy-storage device charges, remove the maximum SOC limit, and control the at least one power converter to charge the at least one energy-storage device to a maximum SOC. In at least one example, the maximum SOC limit is less than 100% and the maximum SOC is 100%.

According to at least one aspect of the disclosure, a non-transitory computer-readable medium storing thereon sequences of computer-executable instructions for controlling a power system configured to provide output power derived from at least one energy-storage device to at least one load in a battery mode of operation is provided, the sequences of computer-executable instructions including instructions that instruct at least one processor to determine one or more battery-mode parameters associated with the battery mode of operation, determine a maximum state-of-charge (SOC) limit based on the one or more battery-mode parameters, and control the power system to limit charging of the at least one energy-storage device to the maximum SOC limit.

In at least one example, the one or more battery-mode parameters include one or more of a load profile of the at least one load, a total necessary runtime of the at least one energy-storage device, or a total available runtime of the at least one energy-storage device in the battery mode. In at least one example, the instructions further instruct the at least one processor to determine, based on the one or more battery-mode parameters, a maximum expected runtime of the at least one energy-storage device, and determine the maximum SOC limit based on the maximum expected runtime of the at least one energy-storage device. In at least one example, the instructions further instruct the at least one processor to determine a maximum expected SOC corresponding to the maximum expected runtime, and determine the maximum SOC limit based on the maximum expected SOC. In at least one example, determining the maximum SOC limit includes at least one of multiplying the maximum expected SOC by a multiplication safety factor or adding the maximum expected SOC with an addition safety factor.

According to at least one aspect of the disclosure, a method of controlling a power system configured to provide output power derived from at least one energy-storage device to at least one load in a battery mode of operation is provided, the method comprising determining one or more battery-mode parameters associated with the battery mode of operation, determining a maximum state-of-charge (SOC) limit based on the one or more battery-mode parameters, and controlling the power system to limit charging of the at least one energy-storage device to the maximum SOC limit.

In at least one example, the one or more battery-mode parameters include one or more of a load profile of the at least one load, a total necessary runtime of the at least one energy-storage device, or a total available runtime of the at least one energy-storage device in the battery mode.

### BRIEF DESCRIPTION OF THE DRAWINGS

Various aspects of at least one embodiment are discussed below with reference to the accompanying figures, which are not intended to be drawn to scale. The figures are included to provide an illustration and a further understanding of the various aspects and embodiments, and are incorporated in and constitute a part of this specification, but are not intended as a definition of the limits of any particular embodiment. The drawings, together with the remainder of the specification, serve to explain principles and operations of the described and claimed aspects and embodiments. In the figures, each identical or nearly identical component that is illustrated in various figures is represented by a like numeral. For purposes of clarity, not every component may be labeled in every figure. In the figures:
FIG. 1 illustrates a block diagram of a power system according to an example;
FIG. 2 illustrates a block diagram of an uninterruptible power supply (UPS) according to an example;
FIG. 3 illustrates a graph of different modes of operation of the UPS according to an example;
FIG. 4 illustrates a process of determining a maximum-state-of-charge limit according to an example;
FIG. 5 illustrates a process of operating the UPS in an online and/or generator mode of operation according to an example; and
FIG. 6 illustrates a process of operating the UPS in a battery mode of operation according to an example.

### DETAILED DESCRIPTION

Examples of the methods and systems discussed herein are not limited in application to the details of construction and the arrangement of components set forth in the following description or illustrated in the accompanying drawings. The methods and systems are capable of implementation in other embodiments and of being practiced or of being carried out in various ways. Examples of specific implementations are provided herein for illustrative purposes only and are not intended to be limiting. In particular, acts, components, elements and features discussed in connection with any one or more examples are not intended to be excluded from a similar role in any other examples.

Also, the phraseology and terminology used herein is for the purpose of description and should not be regarded as limiting. Any references to examples, embodiments, components, elements or acts of the systems and methods herein referred to in the singular may also embrace embodiments including a plurality, and any references in plural to any embodiment, component, element or act herein may also embrace embodiments including only a singularity. References in the singular or plural form are not intended to limit the presently disclosed systems or methods, their components, acts, or elements. The use herein of "including," "comprising," "having," "containing," "involving," and variations thereof is meant to encompass the items listed thereafter and equivalents thereof as well as additional items.

References to "or" may be construed as inclusive so that any terms described using "or" may indicate any of a single, more than one, and all of the described terms.

As discussed above, uninterruptible power supplies (UPSs) provide uninterrupted power to one or more loads. UPSs may receive input power from any of various power sources, such as a utility mains, a generator, an energy-storage device (for example, a battery), and so forth. In some examples, a UPS may draw input power from the utility mains if power is available from the utility mains. If acceptable power is not available from the utility mains (for example, because of a blackout condition), the UPS may activate the generator such that the generator starts up to provide power to the UPS. However, it may take several seconds or minutes for the generator to start up. Accordingly, during this "changeover time" (that is, the time it takes for the generator to start up), the UPS may draw power from the energy-storage device.

The changeover time may be several minutes, such as approximately two minutes. However, the energy-storage device may have a runtime that is much longer, such as 10 minutes. Thus, only about 20% of the energy storage device's stored energy may be consumed during the changeover time. If the energy-storage device is normally recharged to a maximum charge (that is, 100% state-of-charge [SOC]) between uses, the energy-storage device may discharge from 100% SOC to 80% SOC and subsequently be recharged to 100% in this example.

A lifetime of a battery (that is, a total time that the battery remains in operation between initially being implemented by an end user and when the battery is at an end-of-life and should be replaced) may depend on many factors, including the conditions under which the battery is charged and discharged. That is, a battery discharging for a given amount of time (for example, two minutes) may take more or less off of the lifetime of the battery depending on the conditions under which the battery is discharged.

One example parameter that affects battery lifetime is the SOC at which the battery discharges. For example, discharging from 100% to 80% may impact the lifetime of the battery more than discharging from 60% to 40%. Even though the battery may discharge the same amount of energy over the same amount of time, the lifetime of the battery may be reduced more when discharging from 100% to 80% than 60% to 40%.

Examples of the disclosure provide power devices, such as UPSs, with maximum-SOC limits. In some examples, a power device (or a device coupled thereto, such as a cloud server) determines one or more battery-mode parameters over one or more discharge cycles. Battery-mode parameters include parameters such as an average amount of power discharged, a highest amount of power discharged, and so forth. Based on the one or more battery-mode parameters, the power device may determine a maximum-SOC limit that is less than 100%. In some examples, the maximum-SOC limit may be equal to a highest amount of charge consumed in one discharge cycle multiplied by a safety factor. For example, if the highest amount of power discharged is 20% of the battery's full charge and the safety factor is two, then the maximum-SOC limit may be 40%. Thus, rather than charging the battery to 100% SOC, the power device may charge the battery only to 40%. Discharging from 40% SOC rather than 100% SOC may extend the lifetime of the battery.

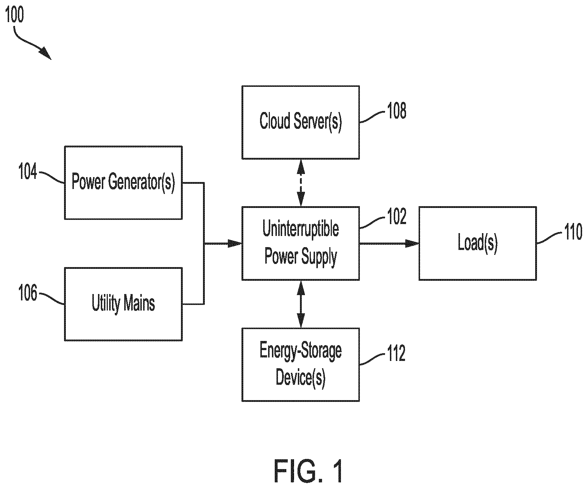

FIG. 1 illustrates a block diagram of a power system 100 according to an example. The power system 100 includes an uninterruptible power supply (UPS) 102, one or more power generators 104 ("generator 104"), a utility-mains supply 106 ("mains 106"), one or more cloud servers 108 ("cloud server 108"), one or more loads 110 ("load 110"), and one or more energy-storage devices 112 ("energy-storage device 112").

The UPS 102 may include one or more input connections coupled to the generator 104, the mains 106, and the energy-storage device 112. The UPS 102 may include an output connection coupled to the load 110. The UPS 102 may be communicatively coupled to various devices, such as the cloud server 108.

As discussed in greater detail below, the UPS 102 is configured to provide uninterruptible power to the load 110. If acceptable power is available from the mains 106, then the UPS 102 may draw input power from the mains 106 to provide output power to the load 110. The UPS 102 may also provide recharging power derived from the input power to the energy-storage device 112.

Acceptable power may not always be available from the mains 106. For example, the mains 106 may experience a blackout condition, voltage sags, voltage swells, and so forth, which render the input power unacceptable. Power received from the mains 106 may be characterized by parameters, such as voltage, current, harmonics, and/or other parameters. Power may be considered acceptable if the parameters meet determined criteria, such as by having voltage values that fall within a certain range of acceptable values. Power may be considered unacceptable if the parameters do not meet the criteria, such as by having voltage values that fall outside of the range of acceptable values.

The UPS 102 may stop drawing input power from the mains 106 and activate the generator 104 if the mains input power is unacceptable. Activating the generator 104 may include sending an activation signal to the generator 104. However, the generator 104 may require a certain amount of time to start up, referred to as a "changeover time." In particular, the generator 104 may need to build up a desired amount of voltage and synchronize an output-voltage frequency with desired output parameters (for example, 230 V and 50 Hz, or 120 V and 60 Hz, or different parameters) before the generator 104 is ready to provide acceptable output power to the UPS 102. In some examples, the desired output parameters may be selected based on (for example, be equal to) the rated parameters of the mains 106. Accordingly, the synchronization process may be referred to herein as "synchronizing with the mains 106" in light of the fact that the desired output parameters may be based on the rated parameters of the mains 106. In another example, the synchronization process may be referred to herein as "synchronizing with the load 110" in light of the fact that the desired output parameters may be based on the rated parameters of the mains 106, which may in turn be rated to power the load 110. Accordingly, being "synchronized with a load" and/or "synchronized with a mains" may refer to a state of a generator in which the generator is outputting power with a nominal voltage and frequency that the generator is rated to provide. The rating, in turn, may be based on or otherwise correspond to properties of the load and/or mains. The changeover time for the generator 106 to build up this desired voltage and frequency may take several seconds or minutes.

During the changeover time, the UPS 102 may draw power from the energy-storage device 112. Thus, the energy-storage device 112 ensures that power is available to the UPS 102 even when the mains 106 is not providing acceptable power and the generator 104 has not fully started up yet. In some examples, the energy-storage device 112 may be used primarily or exclusively during this changeover time. The changeover time may be only a fraction of the maximum available runtime of the energy-storage device 112. For example, the changeover time may only be approximately two minutes, yet the energy-storage device 112 may have a runtime of approximately 10 minutes when fully charged. As discussed above, it may be advantageous to limit a maximum SOC of the energy-storage device 112 in view of the fact that the necessary runtime of the energy-storage device 112 (which may, for example, be equal to the changeover time) may be substantially lower than the maximum available runtime of the energy-storage device 112 (for example, when the energy-storage device 112 discharges from a full charge).

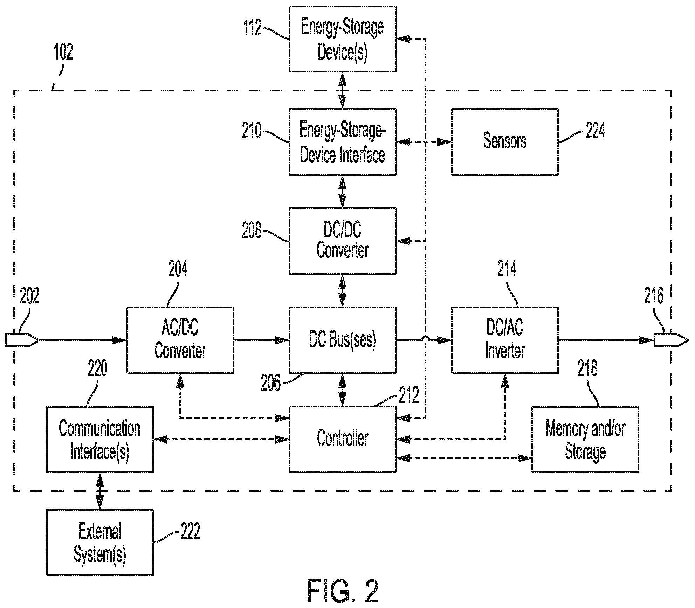

FIG. 2 illustrates a block diagram of the UPS 102 in greater detail according to an example. The UPS 102 includes an input 202, an AC/DC converter 204, one or more DC busses 206, a DC/DC converter 208, an energy-storage-device interface or connection 210, at least one controller 212 ("controller 212"), a DC/AC inverter 214, an output 216, a memory and/or storage 218, one or more communication interfaces 220 ("communication interfaces 220"), which may be communicatively coupled to one or more external systems 222 ("external systems 222"), and one or more voltage sensors and/or current sensors 224 ("sensors 224").

The input 202 is coupled to the AC/DC converter 204 and to at least one AC-power source. The at least one power source may include a first power source and a second power source. For example, the input 202 may be coupled to the generator 104 (first power source) and/or the mains 106 (second power source) via the same input connection or via respective input connections. The AC/DC converter 204 is coupled to the input 202 and to the one or more DC busses 206, and is communicatively coupled to the controller 212. The one or more DC busses 206 are coupled to the AC/DC converter 204, the DC/DC converter 208, and to the DC/AC inverter 214, and are communicatively coupled to the controller 212. The DC/DC converter 208 is coupled to the one or more DC busses 206 and to the energy-storage-device interface 210, and is communicatively coupled to the controller 212. The energy-storage-device interface 210 is coupled to the DC/DC converter 208, and is configured to be coupled to the energy-storage device 112 and/or another energy-storage device. In some examples, the energy-storage-device interface 210 is configured to be communicatively coupled to the controller 212.

In some examples, the UPS 102 may be external to the energy-storage device 112 and may be coupled to the energy-storage device 112 via the energy-storage-device interface 210. In various examples, the UPS 102 may include one or more energy-storage devices, which may include the energy-storage device 112. The energy-storage device 112 may include one or more batteries, capacitors, flywheels, or other energy-storage devices in various examples.

The DC/AC inverter 214 is coupled to the one or more DC busses 206 and to the output 216, and is communicatively coupled to the controller 212. The output 216 is coupled to the DC/AC inverter 214, and to an external load. For example, the output 216 may be coupled to the load 110. The controller 212 is communicatively coupled to the AC/DC converter 204, the one or more DC busses 206, the DC/DC converter 208, the energy-storage-device interface 210, the DC/AC inverter 214, the memory and/or storage 218, the communication interfaces 220, and/or the energy-storage device 112. The sensors 224 are communicatively coupled to the controller 212 and may be coupled to one or more other components of the UPS 102, such as the input 202, the AC/DC converter 204, the one or more DC busses 206, the DC/DC converter 208, the energy-storage-device interface 210, the DC/AC inverter 214, and/or the output 216.

As discussed above, the input 202 is configured to be coupled to an AC mains power source, such as the mains 106, and to receive input AC power having an input voltage level. The UPS 102 is configured to operate in different modes of operation based on the input voltage of the AC power provided to the input 202. The controller 212 may determine a mode of operation in which to operate the UPS 102 based on whether the input voltage of the AC power is acceptable. The controller 212 may include or be coupled to one or more sensors, such as the sensors 224, configured to sense parameters of the input voltage. For example, the sensors 224 may include one or more voltage and/or current sensors coupled to the input 202 and being configured to sense information indicative of a voltage at the input 202 and provide the sensed information to the controller 212.

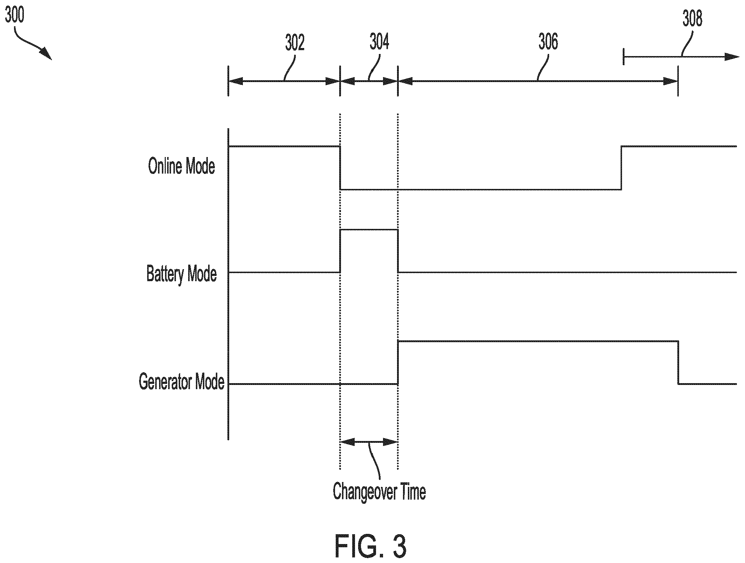

FIG. 3 illustrates a graph 300 depicting different modes of operation over time according to an example. Different modes of operation include an online mode of operation during a first period of time 302, a battery mode of operation during a second period of time 304, and a generator mode of operation during a third period of time 306. For purposes of the following example, the controller 212 may also operate the UPS 102 in the online mode of operation a second time during a fourth period of time 308.

During the first period of time 302, the controller 212 determines (or had previously determined) that the input power is acceptable. More specifically, the controller 212 may determine that input power received from the second power source (e.g. the AC mains power source) is acceptable. When AC power provided to the input 202 is acceptable (for example, by having parameters, such as an input voltage value, that meet specified values, such as by falling within a range of acceptable input voltage values), the controller 212 controls components of the UPS 102 to operate in the online mode of operation for the first period of time 302. In the online mode of operation, AC power received at the input 202 is provided to the AC/DC converter 204. The AC/DC converter 204 converts the AC power into DC power and provides the DC power to the one or more DC busses 206.

The one or more DC busses 206 distribute the DC power to the DC/DC converter 208 and to the DC/AC inverter 214. The DC/DC converter 208 may draw power from the one or more DC busses 206 if, for example, the energy-storage device 112 should be recharged (for example, because an SOC of the energy-storage device 112 is below a recharging threshold) with recharging power derived from the one or more DC busses 206. The DC/DC converter 208 converts the received DC power and provides the converted DC power to the energy-storage-device interface 210. The energy-storage-device interface 210 receives the converted DC power, and provides the converted DC power to the energy-storage device 112 to charge the energy-storage device 112. The DC/AC inverter 214 receives DC power from the one or more DC busses 206, converts the DC power into regulated AC power, and provides the regulated AC power to the output 216 to be delivered to a load.

At a later point in time between the first period of time 302 and the second period of time 304, the controller 212 may determine that the input power is not acceptable. More specifically, the controller 212 may determine that input power received from the second power source (e.g. the AC mains power source) is not acceptable. When AC power provided to the input 202 from the AC mains power source is not acceptable (for example, by having parameters, such as an input voltage value, that do not meet specified values, such as by falling outside of a range of acceptable input voltage values), the controller 212 may control components of the UPS 102 to operate in a battery mode of operation. In the battery mode of operation, the UPS 102 sends (for example, via the controller 212 and the communication interface 220) an activation signal to the generator 104 to start up. More specifically, the controller 212 may send an activation signal to the first power source (e.g. the generator) responsive to determining that the input power is not acceptable. While waiting for the generator 104 to start up during the second period of time 304 (also referred to as the changeover time), the UPS 102 draws power from the energy-storage device 112.

For example, in the battery mode of operation, DC power may be discharged from the energy-storage device 112 to the energy-storage-device interface 210. The energy-storage-device interface 210 provides the discharged DC power to the DC/DC converter 208. The DC/DC converter 208 converts the received DC power and distributes the DC power amongst the one or more DC busses 206. The one or more DC busses 206 provide the received power to the DC/AC inverter 214. The DC/AC inverter 214 receives the DC power from the one or more DC busses 206, converts the DC power into regulated AC power, and provides the regulated AC power to the output 216. The controller 212 may be configured to control the at least one power converter to provide power to the output 216 in the battery mode of operation responsive to sending the activation signal to the first power source.

Once the generator 104 has started up at the end of the second period of time 304, the third period of time 306 begins in which the battery mode of operation ends and the generator mode of operation begins. In the generator mode of operation, AC power received at the input 202 (for example, from the generator 104) is provided to the AC/DC converter 204. The AC/DC converter 204 converts the AC power into DC power and provides the DC power to the one or more DC busses 206. The one or more DC busses 206 distribute the DC power to the DC/AC inverter 214 and, in some examples, the DC/DC converter 208. The DC/AC inverter 214 receives DC power from the one or more DC busses 206, converts the DC power into regulated AC power, and provides the regulated AC power to the output 216 to be delivered to a load.

The DC/DC converter 208 may draw power from the one or more DC busses 206 if, for example, the energy-storage device 112 should be recharged (for example, because an SOC of the energy-storage device 112 is below a recharging threshold SOC) with recharging power derived from the one or more DC busses 206. In other examples, however, the DC/DC converter 208 does not recharge the energy-storage device 112 with power from the generator 104 and instead only recharges the energy-storage device 112 with power from the mains 106. The DC/DC converter 208 converts the received DC power and provides the converted DC power to the energy-storage-device interface 210. The energy-storage-device interface 210 receives the converted DC power, and provides the converted DC power to the energy-storage device 112 to charge the energy-storage device 112.

At a later point in time towards the end of the third period of time 306 and beginning at the fourth period of time 308, acceptable input power may once again be available from the mains 106. Accordingly, the controller 212 may send a deactivation signal to the generator 104 and begin drawing input power from the mains 106 to resume the online mode of operation. There may be a slight overlap between the generator mode of operation and the online mode of operation (that is, an overlap between the third period of time 306 and the fourth period of time 308) during which power is being provided to the UPS 102 from both the generator 104 and the mains 106. During this overlap, the controller 212 may analyze the power received from the mains 106 to verify that the power quality is acceptable before switching to drawing power from the mains 106 in lieu of the generator 104.

In some examples, the sensors 224 may include one or more sensors coupled to one or more of the components of the UPS 102 such that a voltage and/or current of one or more of the foregoing components may be determined by the controller 212. The controller 212 may store information in, and/or retrieve information from, the memory and/or storage 218. For example, the controller 212 may store information indicative of sensed parameters (for example, input-voltage values of the AC power received at the input 202) in the memory and/or storage 218. The controller 212 may further receive information from, or provide information to, the communication interfaces 220.

The communication interfaces 220 may include one or more communication interfaces including, for example, user interfaces (such as display screens, touch-sensitive screens, keyboards, mice, track pads, dials, buttons, switches, sliders, light-emitting components such as light-emitting diodes, sound-emitting components such as speakers, buzzers, and so forth configured to output sound inside and/or outside of a frequency range audible to humans, and so forth), wired communication interfaces (such as wired ports), wireless communication interfaces (such as antennas), and so forth, configured to exchange information with one or more systems, such as the external systems 222, or other entities, such as human beings. The external systems 222 may include any device, component, module, and so forth, that is external to the UPS 102, such as a server, database, laptop computer, desktop computer, tablet computer, smartphone, central controller or data-aggregation system, other UPSs, and so forth. In various examples, the external systems 222 may include the cloud server 108.

Accordingly, the energy-storage device 112 may discharge power to the UPS 102 during the battery mode of operation between the online mode of operation and the generator mode of operation (that is, during the changeover time between the online mode of operation and the generator mode of operation). The energy-storage device 112 may be recharged during the online mode of operation and, in some examples, during the generator mode of operation. As discussed above, however, a maximum-SOC limit may be imposed such that the energy-storage device 112 is recharged to an SOC that is less than the maximum energy capacity of the energy-storage device 112 (that is, 100% SOC).

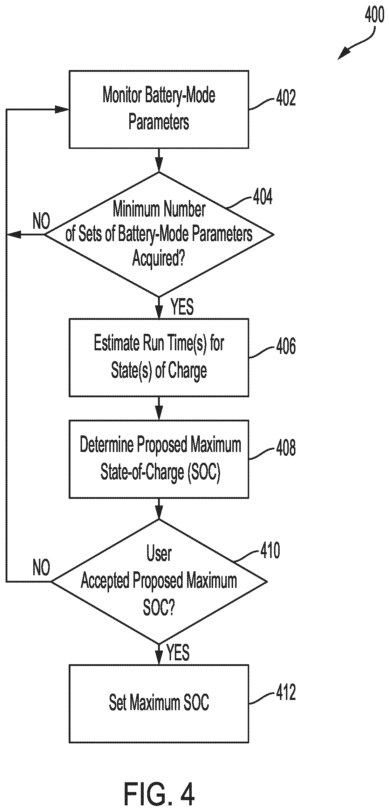

FIG. 4 illustrates a process 400 of identifying and implementing a maximum-SOC limit according to an example. The process 400 may be executed by the at least one controller 212, the cloud server 108, or a combination thereof. For purposes of explanation, the following description is provided according to an example in which the cloud server 108 executes the process 400. However, the process 400 may be executed partially or entirely by the at least one controller 212 in other examples.

At act 402, the cloud server 108 monitors one or more battery-mode parameters. The one or more battery-mode parameters may be parameters associated with the battery mode of operation. For example, the battery-mode parameters may include an amount of power discharged by the energy-storage device 112 during the battery mode of operation, a discharge current or voltage of the energy-storage device 112 during the battery mode of operation, a runtime of the energy-storage device 112 during the battery mode of operation, a changeover time for the generator 104 to synchronize with the mains 106 (which may be approximately equal to the runtime of the energy-storage device 112 during the battery mode of operation and which may be considered the "total necessary runtime of the energy-storage device 112), and so forth.

The one or more battery-mode parameters may include parameters acquired during modes of operation other than the battery mode of operation which might nonetheless indicate aspects of, or be associated with, the battery mode of operation. For example, the battery-mode parameters may include a load profile of the load 110, an amount of power drawn by the load 110 in any mode of operation, an amount of voltage across the load 110 in any mode of operation, an amount of current drawn by the load 110 in any mode of operation, and so forth. Parameters indicative of the amount of power drawn by the load 110 in modes of operation such as the online mode of operation may be indicative of how much power will be drawn in the battery mode of operation. In various examples, the one or more battery parameters may include or be used to determine an amount of charge discharged by the energy-storage device 112 each time the energy-storage device 112 is in the battery mode of operation.

At act 404, the cloud server 108 determines whether a minimum number of sets of battery-mode parameters have been acquired. A set of battery-mode parameters may be acquired each time the UPS 102 is in the battery mode of operation and the energy-storage device 112 is discharging power to the UPS 102. Accordingly, while battery-mode parameters may include parameters acquired during any mode of operation, act 404 may specifically consider battery-mode parameters acquired during the battery mode of operation. The at least one controller may be configured to determine one or more battery-mode parameters associated with the battery mode of operation.

The minimum number of sets of battery-mode parameters may be any of various numbers, such as one set, five sets, 15 sets, and so forth. Continuing with an example in which the minimum number is five, act 404 may include the cloud server 108 determining whether the UPS 102 has been in the battery mode of operation at least five times, during which the cloud server 108 has acquired respective sets of the battery-mode parameters. If the minimum number of sets of battery-mode parameters has not been acquired (404 NO), then the process 400 returns to act 402. Otherwise, if the minimum number of sets of battery-mode parameters has been acquired (404 YES), then the process 400 continues to act 406.

At act 406, the cloud server 108 estimates a respective remaining runtime for a given SOC. For example, the cloud server 108 may determine that at 20% SOC, the remaining runtime of the energy-storage device 112 is two minutes, that at 50% SOC the remaining runtime is five minutes, that at 80% SOC the remaining runtime is eight minutes, and so forth. The cloud server 108 may execute the determination based on the one or more battery-mode parameters acquired at act 402. For example, if the cloud server 108 determines that, over one discharge cycle the energy-storage device 112 discharged from 100% SOC to 80% SOC over two minutes, that 20% SOC consumption corresponds to two minutes of runtime. In some examples, the cloud server 108 may consider not only the change in SOC values but the absolute SOC values to identify corresponding runtimes. For example, although the energy-storage device 112 may discharge from 100% SOC to 80% over the course of two minutes, the same change in SOC at different SOCs (for example, 60% SOC to 40% SOC) may occur over the source of a different period of time.

At act 408, the cloud server 108 determines a proposed maximum-SOC limit. The maximum-SOC limit represents an SOC less than 100% to which the energy-storage device 112 will be recharged. The cloud server 108 may determine the maximum-SOC limit based on the one or more battery parameters acquired at act 402. In one example, the cloud server 108 may determine a maximum expected runtime of the energy-storage device 112 based on the one or more battery-mode parameters. The maximum expected runtime may represent a longest amount of time that the energy-storage device 112 will be expected to be running for any given discharge event (that is, any given period of operating the UPS 102 in the battery mode of operation). In one example, the cloud server 108 may identify the longest runtime of the energy-storage device 112 during all of the discharge events across all of the sets of battery-mode parameters acquired at act 402.

For example, suppose the longest runtime of the energy-storage device 112 during all of the discharge events monitored by the cloud server 108 is two minutes. The cloud server 108 may thus determine that the longest runtime of the energy-storage device 112 needed in the future may be approximately two minutes. The cloud server 108 may identify an SOC corresponding to the longest runtime. The cloud server 108 may determine a maximum expected SOC corresponding to the maximum expected runtime. For example, the cloud server 108 may have determined at act 406 that the energy-storage device 112 has a runtime of two minutes when charged to 20% SOC. Thus, the cloud server 108 may identify 20% SOC as the highest SOC expected to be consumed by the energy-storage device 112 in the future.

The at least one controller 212 may be configured to determine the maximum SOC limit based on the maximum expected runtime of the at least one energy-storage device and/or based on the maximum expected SOC. To determine the maximum-SOC limit based on the maximum SOC and/or maximum runtime, the cloud server 108 may add a buffer to the SOC or runtime to decrease a likelihood that the necessary runtime of the energy-storage device 112 falls below the available runtime of the energy-storage device 112. For example, the cloud server 108 may multiply the maximum SOC or the maximum runtime by, or may add the maximum SOC or the maximum runtime to, a safety factor. If the safety factor is a factor of 1.75, for example, the cloud server 108 may multiply the maximum SOC of 20% by 1.75 to arrive at a proposed maximum-SOC limit of 35%.

At act 410, the cloud server 108 proposes the maximum-SOC limit to a user of the UPS 102 and determines whether the user has accepted the proposed maximum-SOC limit. For example, the cloud server 108 may wirelessly communicate the proposed maximum-SOC limit to the user via the user's smartphone or computer, or to the UPS 102 to display to the user, or via any other means. If the user does not accept the proposed maximum-SOC limit (410 NO), then the process 400 returns to act 402. The process 400 may then repeat, and the cloud server 108 may continue to monitor the battery-mode parameters and subsequently propose a new maximum-SOC limit to the user in the future. Otherwise, if the user does accept the proposed maximum-SOC limit (410 YES), then the process 400 continues to act 412.

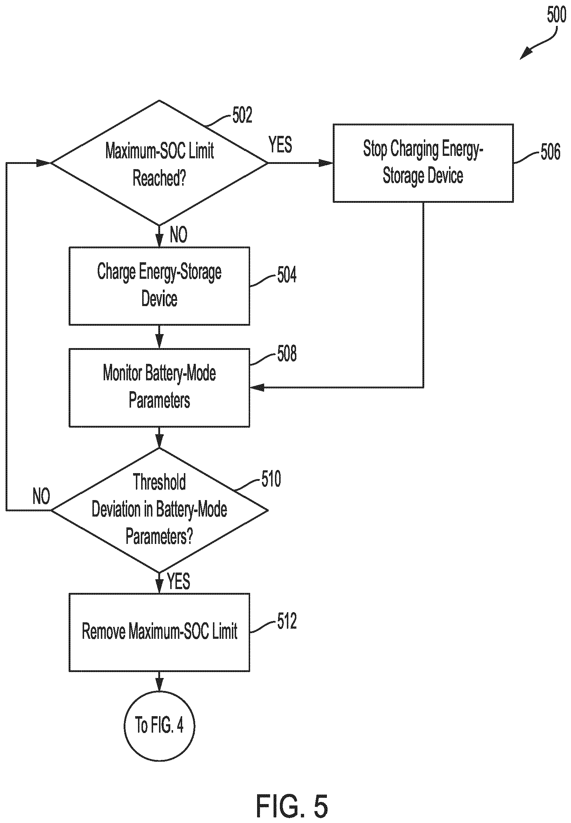

At act 412, the cloud server 108 sets the maximum-SOC limit. For example, the cloud server 108 may communicate the maximum-SOC limit to the UPS 102. The UPS 102 may implement the maximum-SOC limit by charging the energy-storage device 112 to, at most, the maximum-SOC limit during the online mode of operation and/or the generator mode of operation, as discussed below with respect to FIG. 5. The at least one controller 212 may be configured to control the at least one power converter to charge the at least one energy-storage device to the maximum SOC limit. A processor may control the power system to limit charging of the at least one energy-storage device to the maximum SOC limit.

FIG. 5 illustrates a process 500 of operating the UPS 102 in the online mode of operation according to an example. As discussed above, in the online mode of operation, the UPS 102 may have access to input power from the mains 106, which the UPS 102 can use to power the load 110 and/or recharge the energy-storage device 112. The process 500 may be executed during the online mode of operation once the maximum-SOC limit has been imposed pursuant to the process 400. In some examples, the process 500 may be executed by the UPS 102 (for example, by the at least one controller 212), the cloud server 108, a combination of both, and so forth. In some examples (for example, where the energy-storage device 112 may be recharged during the generator mode of operation), the process 500 may also be executed during the generator mode of operation. For purposes of explanation, an example is provided in which the process 500 is executed by a combination of the cloud server 108 and the at least one controller 212 in the online mode of operation. In other examples, however, either the cloud server 108 or the at least one controller 212 may execute any act of the process 500.

At act 502, the at least one controller 212 determines whether a current SOC of the energy-storage device 112 is at or above the maximum-SOC limit. For example, if the maximum-SOC limit is 35%, the at least one controller 212 may determine whether the current SOC of the energy-storage device 112 is at least 35%. The at least one controller 212 may determine the current SOC by polling a battery-management system of the energy-storage device 112 for the current SOC, by sensing one or more parameters of the energy-storage device 112 (for example, a current and/or voltage) via the sensors 224, and so forth.

If the at least one controller 212 determines that the at least one energy-storage device 112 is not at or above the maximum-SOC limit (502 NO) and is therefore below the maximum-SOC limit, then the process 500 continues to act 504 to charge the energy-storage device 112. Otherwise, if the at least one controller 212 determines that the at least one energy-storage device 112 is at or above the maximum-SOC limit (502 YES), then the process 500 continues to act 506 to stop charging (or continue not charging) the energy-storage device 112.

At act 504, the at least one controller 212 controls the UPS 102 to charge the energy-storage device 112. For example, the at least one controller 212 may control the DC/DC converter 208 to provide recharging power derived from the input 202 to the energy-storage device 112 via the energy-storage-device interface 210. In other words, the at least one controller 212 may control (504) the at least one power converter to charge the at least one energy-storage device to a maximum SOC.

At act 508, the cloud server 108 monitors the one or more battery-mode parameters. In some examples, the at least one controller 212 monitors the one or more battery-mode parameters in addition to, or in lieu of, the cloud server 108. As discussed above, the one or more battery-mode parameters may include a load profile of the load 110, such as a load current, a load voltage, a load power, and so forth, which describe an amount of energy that might be drawn from the energy-storage device 112 during the battery mode of operation. Accordingly, although act 508 is executed during the online mode of operation rather than the battery mode of operation, the one or more battery-mode parameters acquired at act 508 may be indicative of how much power may be drawn during a future battery mode of operation.

At act 510, the cloud server 108 determines whether the one or more battery-mode parameters monitored at act 506 indicate at least a threshold deviation from the one or more battery-mode parameters acquired at act 402. In other words, the at least one controller 212 may be configured to identify a change in the one or more battery-mode parameters while the at least one energy-storage device charges. The threshold deviation may indicate at least a threshold increase in power drawn by the load 110. The increase in power drawn by the load may impact the amount of power which might be drawn from the energy-storage device 112 during the battery mode of operation in the future. The threshold amount may be selected based on an increase that may suggest that the maximum-SOC limit currently being implemented should be re-evaluated. For example, if the maximum-SOC limit was determined pursuant to the process 400 based on the most amount of energy being drawn from the energy-storage device 112 being 20% of the SOC of the energy-storage device 112, and the load 110 subsequently begins drawing an amount of power predicted to consume approximately 40% of the SOC of the energy-storage device 112, then the maximum-SOC limit may be re-evaluated. If the cloud server 108 determines that there has been a change in the one or more battery-mode parameters above a threshold deviation (510 YES), then the process 500 continues to act 512.

At act 512, the cloud server 108 removes the maximum-SOC limit such that the target charging threshold for the energy-storage device 112 is once again 100%. Because the process 500 may be executed during the online mode of operation, the UPS 102 may begin recharging the energy-storage device 112 to 100% SOC. The process 500 then ends and the process 400 is again executed to determine a new proposed maximum-SOC limit based on the increased power drawn by the load 110.

Returning to act 510, if the cloud server 108 determines that there has not been a threshold deviation from the one or more battery-mode parameters (510 NO), then the process 500 returns to act 502. At act 502, the at least one controller 212 again determines whether the energy-storage device 112 is at or above the maximum-SOC limit. If the energy-storage device 112 has been charged to the maximum-SOC limit (502 YES), then the process 500 continues to act 506.

At act 506, the at least one controller 212 stops charging the energy-storage device 112. For example, the at least one controller 212 may stop controlling the DC/DC converter 208 to provide recharging power to the energy-storage device 112 via the energy-storage-device interface 210. The process 500 may then continue to act 508, which is executed in the manner discussed above.

Accordingly, the process 400 may be executed to determine a proposed maximum-SOC limit. The process 500 may be executed to operate the UPS 102 during the online and/or generator mode of operation once the maximum-SOC limit has been imposed.

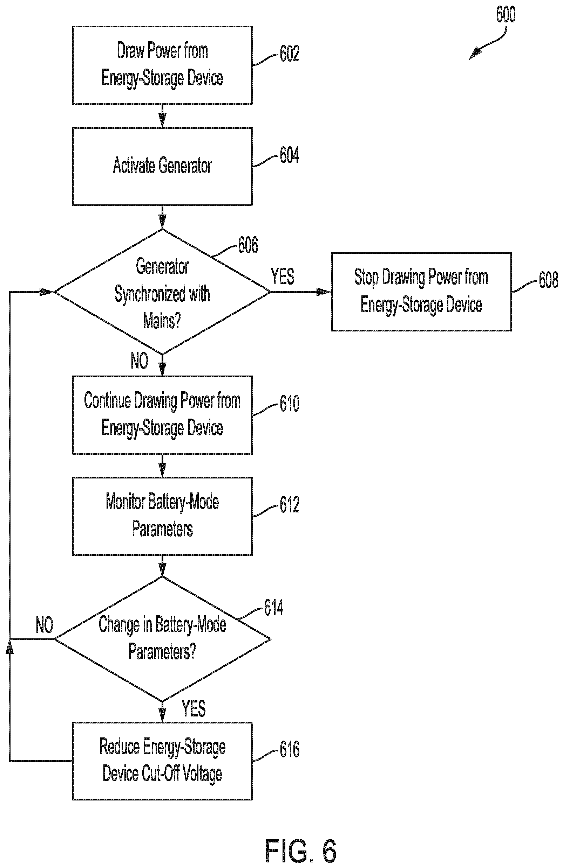

FIG. 6 illustrates a process 600 that may be executed responsive to entering the battery mode of operation (that is, responsive to the at least one controller 212 determining that acceptable input power is unavailable from the mains 106) once the maximum-SOC limit has been imposed. The process 600 may be executed by the cloud server 108, the at least one controller 212, or a combination of both. For purposes of explanation, the following description provides an example in which the process 600 is executed by a combination of the cloud server 108 and the at least one controller 212.

At act 602, the at least one controller 212 controls the DC/DC converter 208 to draw power from the energy-storage device 112. As discussed above, the at least one controller 212 may control the DC/DC converter 208 to draw power from the energy-storage device 112 via the energy-storage-device interface 210. The at least one controller 212 directs the power to the output 216 via the DC/AC inverter 214 to be provided to the load 110. The at least one controller 212 may be configured to control the at least one power converter to provide power to the output in a battery mode of operation.

At act 604, the at least one controller 212 activates the generator 104. Activating the generator 104 may include the at least one controller 212 sending an activation signal to the generator 104. For example, the at least one controller 212 may send an activation signal to the generator 104 via the communication interface 220. The generator 104 may begin starting up responsive to receiving the activation signal. As discussed above, it may take several seconds or minutes for the generator to build up power with a desired voltage and synchronize the frequency of the generator power with that of the mains 106.

At act 606, the at least one controller 212 determines whether the generator 104 is synchronized with the mains 106. For example, the at least one controller 212 may communicate with the generator 104 to determine a frequency of the power output by the generator 104, and/or may measure, via the sensors 224, properties of the generator power available from the generator 104 at the input 202. The at least one controller 212 may determine that the generator 104 is synchronized with the mains 106 by determining whether the frequency of the power output by the generator 104 is within a threshold range of a rated frequency of the power provided by the mains 106. If the at least one controller 212 determines that the generator 104 is synchronized with the mains 106 (606 YES), then the process 600 continues to act 608.

At act 608, the at least one controller 212 controls the DC/DC converter 208 to stop drawing power from the energy-storage device 112. Because the generator 104 is synchronized with the mains 106, the UPS 102 may transition from the battery mode of operation to the generator mode of operation. Accordingly, the at least one controller 212 may stop drawing power from the energy-storage device 112 and instead begin drawing power from the generator 104, thereby ending execution of the process 600.

Returning to act 606, if the at least one controller 212 determines that the generator 104 is not yet synchronized with the mains 106 (606 NO), then the process 600 continues to act 610. At act 610, the at least one controller 212 continues controlling the DC/DC 208 to draw power from the energy-storage device 112. In other words, the at least one controller 212 is configured to control the at least one power converter to provide power to the output in the battery mode of operation until the first power source is synchronized with the at least one load.

At act 612, the cloud server 108 monitors the one or more battery-mode parameters. Act 612 may be substantially similar or identical to act 508 and is not repeated for purposes of brevity. For example, the at least one controller 212 may monitor the one or more battery-mode parameters for changes while the at least one energy-storage device discharges.

At act 614, the cloud server 108 determines whether the one or more battery-mode parameters monitored at act 612 indicate at least a threshold deviation from the one or more battery-mode parameters acquired at act 402. In other words, the at least one controller 212 may be configured to identify a change in the one or more battery-mode parameters while the at least one energy-storage device discharges. Act 614 may be substantially similar or identical to act 510. In some examples, however, the threshold associated with act 614 may be different than (for example, greater or less than) the threshold associated with act 510. If the cloud server 108 determines that there has not been at least a threshold deviation (614 NO), then the process 600 returns to act 606. Acts 606-614 are repeated until either the generator 104 is synchronized with the load 110 (606 YES), or there is a threshold deviation in the battery-mode parameters (614 YES). If there is a threshold deviation in the battery-mode parameters (614 YES), then the process 600 continues to act 616.

At act 616, the at least one controller 212 reduces the cut-off voltage of the energy-storage device 112. Lowering the cut-off voltage (that is, the voltage of the energy-storage device 112 at which the energy-storage device 112 is disallowed from discharging any longer) may increase the runtime of, and thus the amount of power available from, the energy-storage device 112. Because the power drawn by the load 110 was determined to have increased (614 YES), more power may be desired than initially anticipated when the maximum-SOC limit was set. Accordingly, lowering the cut-off voltage may accommodate the additional desired power. The process 600 may then return to act 606.

In some examples, an amount by which the cut-off voltage is reduced may be determined based on the one or more battery-mode parameters monitored at act 612. For example, the cloud server 108 and/or the at least one controller 212 may determine an amount of additional power necessary based on the monitored parameters, and may reduce the cut-off voltage by an amount necessary to provide the additional power. In other examples, the reduction in the cut-off voltage may be a fixed value.

In various examples, acts 606-616 may be repeated after initially executing act 616 and the cut-off voltage may be reduced several times sequentially. The reductions in the cut-off voltage may be fixed or variable step sizes. In various examples, when power is again available from the mains 106, the cut-off voltage may be reset to an original value prior to reducing the cut-off voltage.

Examples have been provided in which the UPS 102, alone or in combination with the cloud server 108, determines and imposes a maximum-SOC limit on the energy-storage device 112. Acts of the processes 400-600 have been described as being executed by the cloud server 108 in some examples, and by the at least one controller 212 in other examples. As discussed above, in various examples any act of the processes 400-600 may be executed by the cloud server 108, and any acts of the processes 400-600 may be executed by the at least one controller 212. For example, in some examples all of the acts of the processes 400-600 may be executed by the at least one controller 212.

Various controllers, such as the at least one controller 212, may execute various operations discussed above. Using data stored in associated memory and/or storage, the at least one controller 212 also executes one or more instructions stored on one or more non-transitory computer-readable media, which the at least one controller 212 may include and/or be coupled to, that may result in manipulated data. In some examples, the at least one controller 212 may include one or more processors or other types of controllers. In one example, the at least one controller 212 is or includes at least one processor. In another example, the at least one controller 212 performs at least a portion of the operations discussed above using an application-specific integrated circuit tailored to perform particular operations in addition to, or in lieu of, a general-purpose processor. As illustrated by these examples, examples in accordance with the present disclosure may perform the operations described herein using many specific combinations of hardware and software and the disclosure is not limited to any particular combination of hardware and software components. Examples of the disclosure may include a computer-program product configured to execute methods, processes, and/or operations discussed above. The computer-program product may be, or include, one or more controllers and/or processors configured to execute instructions to perform methods, processes, and/or operations discussed above.

## Claims

1. A power system (100) comprising:
an input (202) configured to be coupled to at least one power source, the at least one power source preferably including a first power source and a second power source;
an output (216) configured to be coupled to at least one load;
an energy-storage-device connection (210) configured to be coupled to at least one energy-storage device (112);
at least one power converter (204, 208, 214); and
at least one controller (212) configured to:
control (602) the at least one power converter to provide power to the output in a battery mode of operation,
determine one or more battery-mode parameters associated with the battery mode of operation,
determine (408) a maximum state-of-charge, SOC, limit based on the one or more battery-mode parameters, and
control the at least one power converter to charge the at least one energy-storage device to the maximum SOC limit.

2. The power system of claim 1, wherein the at least one controller is further configured to:
determine that input power received from the second power source is not acceptable; and
send an activation signal to the first power source responsive to determining that the input power is not acceptable.

3. The power system of claim 2, wherein the at least one controller is configured to control the at least one power converter to provide power to the output in the battery mode of operation responsive to sending the activation signal to the first power source.

4. The power system of any of claims 1 to 3, wherein the at least one controller is configured to control (610) the at least one power converter to provide power to the output in the battery mode of operation until the first power source is synchronized with the at least one load.

5. The power system of any of the above claims, wherein the at least one controller is further configured to:
determine, based on the one or more battery-mode parameters, a maximum expected runtime of the at least one energy-storage device; and
determine the maximum SOC limit based on the maximum expected runtime of the at least one energy-storage device.

6. The power system of claim 5, wherein the at least one controller is further configured to:
determine a maximum expected SOC corresponding to the maximum expected runtime; and
determine the maximum SOC limit based on the maximum expected SOC.

7. The power system of any of the above claims, wherein the at least one controller is further configured to:
monitor (612) the one or more battery-mode parameters for changes while the at least one energy-storage device discharges;
identify (614) a change in the one or more battery-mode parameters while the at least one energy-storage device discharges; and
lower (616) a battery cut-off voltage of the at least one energy-storage device responsive to identifying the change in the one or more battery-mode parameters.

8. The power system of any of the above claims, wherein the at least one controller is further configured to:
monitor (508) the one or more battery-mode parameters for changes while the at least one energy-storage device charges;
identify (510) a change in the one or more battery-mode parameters while the at least one energy-storage device charges;
remove (512) the maximum SOC limit; and
control (504) the at least one power converter to charge the at least one energy-storage device to a maximum SOC.

9. A computer-implemented method of controlling a power system configured to provide output power derived from at least one energy-storage device to at least one load in a battery mode of operation, the method comprising:
determining one or more battery-mode parameters associated with the battery mode of operation;
determining a maximum state-of-charge (SOC) limit based on the one or more battery-mode parameters; and
controlling the power system to limit charging of the at least one energy-storage device to the maximum SOC limit.

10. The method of claim 9, wherein it further comprises:
determining, based on the one or more battery-mode parameters, a maximum expected runtime of the at least one energy-storage device; and
determining the maximum SOC limit based on the maximum expected runtime of the at least one energy-storage device.

11. The method of claim 10, wherein it further comprises:
determining a maximum expected SOC corresponding to the maximum expected runtime; and
determining the maximum SOC limit based on the maximum expected SOC.

12. The method of claim 11, wherein determining the maximum SOC limit includes at least one of multiplying the maximum expected SOC by a multiplication safety factor or adding the maximum expected SOC with an addition safety factor.

13. The method of any of claims 9 to 12, wherein it further comprises:
monitoring (612) the one or more battery-mode parameters for changes while the at least one energy-storage device discharges;
identifying (614) a change in the one or more battery-mode parameters while the at least one energy-storage device discharges; and
lowering (616) a battery cut-off voltage of the at least one energy-storage device responsive to identifying the change in the one or more battery-mode parameters.

14. The method of any of claims 9 to 13, wherein it further comprises:
monitoring (508) the one or more battery-mode parameters for changes while the at least one energy-storage device charges;
identifying (510) a change in the one or more battery-mode parameters while the at least one energy-storage device charges;
removing (512) the maximum SOC limit; and
controlling (504) the at least one power converter to charge the at least one energy-storage device to a maximum SOC.

15. A non-transitory computer-readable medium storing thereon sequences of computer-executable instructions for controlling a power system configured to provide output power derived from at least one energy-storage device to at least one load in a battery mode of operation, the sequences of computer-executable instructions including instructions that instruct at least one processor to operate according to any of the method claims 9 to 14.
